# EUROPEAN PATENT SPECIFICATION

(11) **EP 2 002 322 B1**
(45) Date of publication and mention of the grant of the patent: **15.07.2009**
(21) Application number: 07735172.4
(22) Date of filing: 19.03.2007
(51) Int. Cl.: G06F 3/01

(54) **HOTSPOTS FOR EYE TRACK CONTROL OF IMAGE MANIPULATION**
HOTSPOTS ZUR BLICKFOKUSSIERTEN STEUERUNG VON BILDMANIPULATIONEN
ZONES ACTIVES PERMETTANT LA COMMANDE DE LA MANIPULATION D'IMAGES PAR SUIVI OCULAIRE

(30) Priority: 23.03.2006 EP 06111626
(43) Date of publication of application: 17.12.2008
(73) Proprietor: Koninklijke Philips Electronics N.V., 5621 BA Eindhoven (NL)
(72) Inventor: BLOEM, Gerrit-Jan, NL-5656 AA Eindhoven (NL); CHEN, Njin-Zu, NL-5656 AA Eindhoven (NL); JORNA, Gerardus, C., NL-5656 AA Eindhoven (NL)
(74) Representative: Schouten, Marcus Maria
(86) International application number: PCT/IB2007/050946
(87) International publication number: WO 2007/107949

(56) References cited:
- US-A1- 2005 047 629

## Description

The present invention relates to activating functions using eye tracking. In particular, the invention relates to systems for manipulating images or graphics where the manipulation to be performed are selected or activated using eye-tracking.

Application of eye-tracking for selecting or activating tasks in a Graphical User Interface (GUI) is typically applied in situations where the user is disabled or in other ways prevented from using standard GUI pointing devices (e.g. a mouse).

Selecting or activating functions using eye-tracking is typically divided in two sub-functions; pointing and selection. Pointing brings the desired task into the attention of the GUI, comparable to moving a cursor to a position over an icon with the mouse. Pointing is often carried out by either staring at a graphical object representing the desired task, or by moving a cursor by moving the eyes in the direction corresponding to the desired movement. Selection executes the task in focus by confirming that the task pointed at is actually the desired task - comparable to (double)clicking the icon under the cursor. Selection may be carried out e.g. by blinking with the eyes or by other input means (voice, keystroke, etc.).

In programs for manipulating data content and presentation, e.g. image processing software, the actions to be executed are typically controlled by buttons and toolbars located at the edge of the display. It is a disadvantage of prior art GUI applying eye-tracking that the user has to chance his/her focus to another part of the display to point and select, thereby loosing touch with the changes carried out in the region of interest.

Hence, an improved system where the user does not have to remove his/her gaze from the region of interest in order to select or activate the function controlling the manipulation of the region of interest would be advantageous. US-A-2005/0047629 discloses an eye-tracking interaction system wherein a display presents a digital image to a user, a fixation point of a user's eyes on the display is determined, and an image parameter is adjusted when the fixation point of the user's eyes is within a region of interest of the image data.

US 5,850,211 discloses a system for eye-track controlled scrolling of text pages. In relation to Figure 3, US 5,850,211 describes automatic adjusting a scroll speed as a function of the position of the text that the users eyes reads. When the user reads text on the upper part of the screen, no or very slow scrolling is performed, if the user's eyes approaches the bottom part the screen while reading, scrolling starts or increases in speed. The object is to automatically keep the text read by the user nicely centered on the screen. Therefore, when the user's eyes gaze away from a piece of text, this piece of text will automatically be moved out of a focus region of the user's eyes. The reference regions associated with different scrolling scenarios are hidden behind the text and are not visible to the user.

In the present context, the focus or focus area of a person is the area seen sharply by the fovea of the person's eyes. The fovea is a spot located in the center of the macula, and is responsible for sharp central vision, which is necessary in humans for reading, watching television or movies, driving, and any activity where visual detail is of primary importance. Most information from the eye is made available during a fixation, but not during a saccade (fast movement of the eye). During a fixation, the subtended viewing angle for the fovea, i.e. the focus area, provides the bulk of visual information (typically estimated to be the area bound by a solid angle of 1.5-2°); the input from larger eccentricities (the periphery) is less informative.

Accordingly, the invention preferably seeks to mitigate, alleviate or eliminate one or more of the above-mentioned disadvantages singly or in any combination. In particular, it may be seen as an object of the present invention to provide an eye-tracking interaction system and method as well as a software application that solves the above mentioned problems of the prior art by allowing the user perform eye-track based manipulation of image data while having the manipulated image data in focus, i.e. without removing his/her gaze from the image data to be manipulated. This object is achieved in a first aspect of the invention by providing an eye-tracking interaction system for controlling adjustment of image parameters in digital images, the eye-tracking interaction system comprising:
- a display for presenting a digital image, the image having a region of interest (ROI) in which image parameters are to be adjusted;
- an eye-tracking system for determining a fixation point of a user's eyes on the display;
- means for visually outlining areas defining two or more hotspots on the display in relation to the ROI, wherein:

- the hotspots are arranged within a region bordering and at least partly encircling the ROI and allowing a user to have at least part of the ROI in focus when the fixation point of the user's eyes is within a hotspot, the region being defined by inner diameter d and outer diameter D>d;
- the hotspots occupy different angular sections of the region;
- each hotspot is associated with a given adjustment of a given image parameter;
- means for performing adjustment of an image parameter associated with a hotspot when the fixation point of a user's eyes falls within the hotspot, the associated image parameter adjustment being performed at least in the ROI;
- means for providing feedback to the user by highlighting a hotspot when its associated image parameter adjustment is performed.

The digital image may be any form of digital representation of a real-life recording, such as a photo, X-ray image, CT image data, Ultrasound image or image data, MRI image data, including three-dimensional (3D) representations of 3D image data. Highlighting a hotspot means making it more visible or prominent, e.g. by enhancing the outline, changing outline color, change background, etc. Preferably, the means for performing adjustments are configured to perform repeated steps of small parameter value adjustments as long as the fixation point of a user's eyes fall within the associated hotspot.

In one possible layout, the region in which the hotspots are arranged is circular or substantially circular, but it may take many different shapes e.g. a polygon such as a rectangle or a regular polygon, an oval, an ellipse etc. In any case, the terms "radial" and "angular" will be used to describe the directions in relation to the region or the hotspots as illustrated later.

The dimensions of the region within which the hotspots are arranged is characterized by the inner diameter d, being the smallest distance between any two points on an inner outline of the region; and the outer diameter D being the largest distance between any two points on an outer outline of the region. As the region borders the ROI, d is also the outer diameter of the ROI. The radial width of the regions is preferably, but need not be, the same in all directions in which case the region is a band of width (D-d)/2.

The hotspots need not form a closed shape encircling the ROI, angular gaps between hotspots may provide a way for the user's eyes to escape the region without performing any adjustment of image parameters.

The invention is particularly, but not exclusively, advantageous for performing adjustments of image parameters while keeping the image in focus. As specified, the means for performing adjustment operates when the user fixates at a hotspot, i.e. the action comparing to pointing in typical prior art eye tracking UI. In the present invention, moving the gaze to a hotspot selects the associated image parameter adjustment - no separate pointing and selection is required. This simplified selection maneuver would be very confusing for a user of normal GUI toolbars where a number of functions are grouped together so that the user scans the buttons of the toolbar before pointing and selecting the desired button. This does not represent a problem in the present invention due to the layout of the hotspots, bordering and at least partly encircling the ROI. In general, erroneous selection of functions when the user saccades in search for GUI objects must be avoided, and inherent to the eye tracking itself are averaging, filtering and possibly timeouts. In eye tracking, a timeout is a well-defined period of time that the user must fixate at a hotspot in order for it to be activated.

In one embodiment, the eye-tracking system applies a very short timeout, so short that it is not noticeable to the user, such as less than 0,3 seconds or less than 0,2 seconds or such as less than 0,1 seconds or 0,05 seconds. Thereby, the user experiences the function of immediate selection when fixating on a hotspot. A timeout can be placed in the interaction mechanism, but it may as well be included in the fixation position calculation of the tracker itself.

In another possible embodiment, no specific timeout mechanism is applied and the sensitivity of the eye-tracking system is tuned using primarily averaging and filtering.

The arrangement of the hotspots is adapted to allow the user to focus on the ROI, and slightly shift his/her gaze to or towards a hotspot for adjusting an image parameter, while still keeping the ROI in focus so that the effect of the adjustment can be followed and controlled - this is the basic idea of the invention. This provides the advantage that the user need not saccade, scan, pan the display to point at a hotspot, which in turn allows for the simplified selection maneuver that would be considered highly disadvantageous in prior art systems. It may be preferred that the areas defining the hotspots are at least semi-transparent so that parts of the digital image outside the ROI can be seen behind the hotspots. In this case, by performing the image parameter adjustments also in the image parts behind the hotspots, the user can use the adjustments in these parts to get a feeling of the effect of the equivalent adjustment in the ROI.

In a further embodiment, the means for performing adjustment are configured to perform image parameter adjustments when the fixation point of a user's eyes falls within the hotspot only when a previous fixation point of the user's eyes falls within the ROI or another hotspot. This reduces the risk of the user accidentally selecting the adjustment associated with a hotspot.

If the radial width of the region or hotspots is too large, the system may involuntary adjust image parameters when the user takes his eyes to another part of the display or off the display (since the user will saccade through a hotspot). Therefore, the radial width is preferably kept relatively small. It may be preferred that a major part of the ROI is in focus when the fixation point of the user's eyes is within a hotspot, which puts constrains to both the size of the ROI and the radial width of the hotspot. Also, as it is an object that the user should be able to have the ROI in focus when adjusting via hotspot, the radial width is preferably not larger than what allows the user to have at least part of the ROI in focus while gazing at the outer boundary of region or hotspot. As the focus is bound by a spatial angle, the size of the focus depends on a distance L from the users eyes to the display, e.g. an estimated or typical distance. Preferably, one or more of the following specifications characterizes the dimensions of the region or hotspots:
I. D-d ≤ tan(1°) · L.
II. D-d ≤ d or D ≤ 2d.
III. d ≤ tan(2°) · L.
IV. D ≤ tax(4°) · L.
V. the radial and angular width of any hotspot is larger than a precision, δ, to which the eye-tracking system can determine the fixation point on the display.

These specifications serves as a guideline for the design of the layout of hotspots, small deviations are acceptable.

Non-contact methods for eye-tracking, such as optical methods using corneal reflection of infrared light and pupil positions, may be configured to also determine and provide a distance between the user's eyes and the display. Other ways of obtaining this distance may be to add a small additional device such as an IR proximity sensor. In an advantageous embodiment, the means for outlining the areas defining the hotspots comprises means for adjusting the generalized diameters of the region according to a provided distance between the user's eyes and the display. Thereby, the eye-tracking interaction system would be able to automatically adjust the dimensions of hotspots, and potentially the ROI, to fit the distance between the user and the display.

The eye-tracking interaction system is directed to controlling adjustment of image parameters in digital images, where it is important that the user can get visible feedback during the adjustment. Such image parameters may be, but are not limited to, contrast (window width), brightness (window level), color, zoom, rotation and panning.

Preferably, the hotspots may adjust one or more of these image parameters of the ROI.

In a second aspect, the invention relates to a method for eye-track controlled adjustment of image parameters in digital images, the method comprise the steps of:
- providing a display for presenting a digital image, the image having a region of interest (ROI) in which image parameters are to be adjusted;
- providing an eye-tracking system for determining a fixation point of a user's eyes on the display;
- visually outlining areas defining two or more hotspots on the display in relation to the ROI so that:

- the hotspots are arranged within a region bordering and at least partly encircling the ROI and allowing a user to have at least part of the ROI in focus when the fixation point of the user's eyes is within a hotspot, the region being defined by inner diameter d and outer diameter D>d;
- the hotspots occupy different angular sections of the region;
- associating each hotspot with a given adjustment of a given image parameter;
- performing adjustment of an image parameter associated with a hotspot when the fixation point of a user's eyes falls within the hotspot, the associated image parameter adjustment being performed at least in the ROI;
- providing feedback to the user by highlighting a hotspot when its associated image parameter adjustment is performed.

In a third aspect, the invention relates to a computer program product being adapted to enable a computer system comprising at least one computer having data storage means associated therewith to control an eye-tracking interaction system according to the first aspect of the invention. According to the third aspect, the invention provides a software application configured to adapt a processing hardware in a system comprising:
- a computer, or similar electronic data processor, capable of digital image processing;
- a display for presenting a digital image, the image having a region of interest (ROI) in which image parameters are to be adjusted;
- an eye-tracking system for determining a fixation point of a user's eyes on the display;
   to perform eye-track controlled adjustment of digital image parameters, the software application comprising:

- means for visually outlining areas defining two or more hotspots on the display in relation to the ROI, wherein:

- the hotspots are arranged within a region bordering and at least partly encircling the ROI and allowing a user to have at least part of.the ROI in focus when the fixation point of the user's eyes is within a hotspot, the region being defined by inner diameter d and outer diameter D>d;
- the hotspots occupy different angular sections of the region;
- each hotspot is associated with a given adjustment of a given image parameter;
- means for performing adjustment of an image parameter associated with a hotspot when the fixation point of a user's eyes falls within the hotspot, the associated image parameter adjustment being performed at least in the ROI;
- means for providing feedback to the user by highlighting a hotspot when its associated image parameter adjustment is performed.

This aspect of the invention is particularly, but not exclusively, advantageous in that the present invention may be implemented by a software application enabling an image processing system to perform the operations of the first aspect of the invention. Thus, it is contemplated that some image processing system may be changed to operate according to the present invention by installing a software application on the electronic processing system holding the image processing system. Such a software application may be provided on any kind of readable data carrier, e.g. magnetically or optically based medium, or through a computer based network, e.g. the Internet.

In all aspects, the invention relates to providing eye-track controlled adjustment of image parameters, where the user can adjust image parameters while having the image in focus. In the various aspects, the invention is implemented as a system, a method, and a software application. In the preceding and following description, some preferred additional features and elements as well as implementations and embodiments of the invention are described. Although described in relation to one aspect, these features, elements, implementations and embodiments may, as will be apparent for the person skilled in the art, be implemented or embodied in all the different aspects of the invention.

The first, second and third aspect of the present invention may each be combined with any of the other aspects. These and other aspects of the invention will be apparent from and elucidated with reference to the embodiments described hereinafter.

The present invention will now be explained, by way of example only, with reference to the accompanying Figures, where
Fig. 1 illustrates a user with an eye tracking interaction system according to an embodiment of the invention;
Fig. 2 illustrates a region for containing hotspots and defines related concepts and dimensions;
Figs 3A-C and 4A-C illustrate embodiments showing different hotspot layouts;
Fig. 5 shows a display outlining hotspots according to an embodiment of the invention;
Fig. 6 is a flow-chart of a method according to the invention.

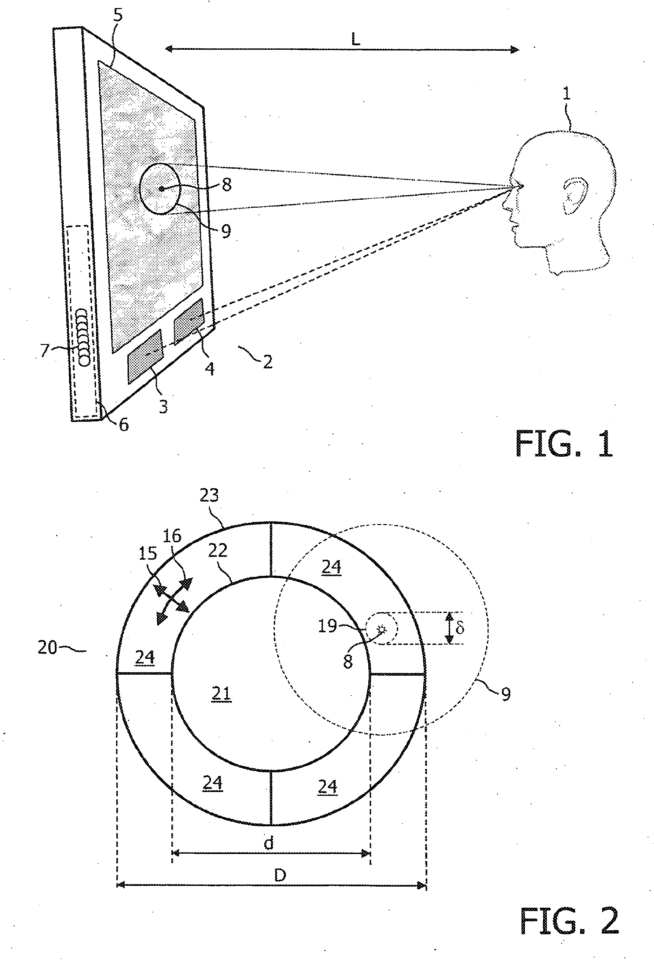

Fig. 1 illustrates a user 1 with an eye tracking interaction system 2 according to an embodiment of the invention. The eye tracking interaction system 2 comprises an eye-tracking system 3, 4 and a display 5 for presenting digital images. The system also comprises an electronic processor or microprocessor chip 6, e.g. a CPU (Central Processing Unit), which can execute available software programs 7. The shown eye-tracking system has an infrared light source 3 and a video camera for detecting infrared light reflected from the user's eyes. By processing the detected information, the eye-tracking system can determine a fixation point 8 of a user's eyes on the display 5. The circle 9 illustrates the focus area of the user, the fixation point 8 typically coincides with the center of the focus area.

Fig. 2 illustrates a region 20 holding areas 24 for defining hotspots. The region 20 is defined by an inner outline 22 of diameter d and an out outline 23 of diameter D. The region 21 inside the inner outline is the region of interest (ROI). In the shown example, the region is a circular band having a width in a radial direction 15, the radial width, of (D-d)/2. Similarly, the areas 24 have a width in an angular direction 16, the angular width, of π/2 radians or 90°. Shown in relation to the region 20 is the focus area 9 of a user as well as a fixation point 8 of the user's eyes as determined by an eye tracking system or device. Eye tracking systems determine the coordinates of a fixation point 8 with some given precision δ as indicated by the circle 19.

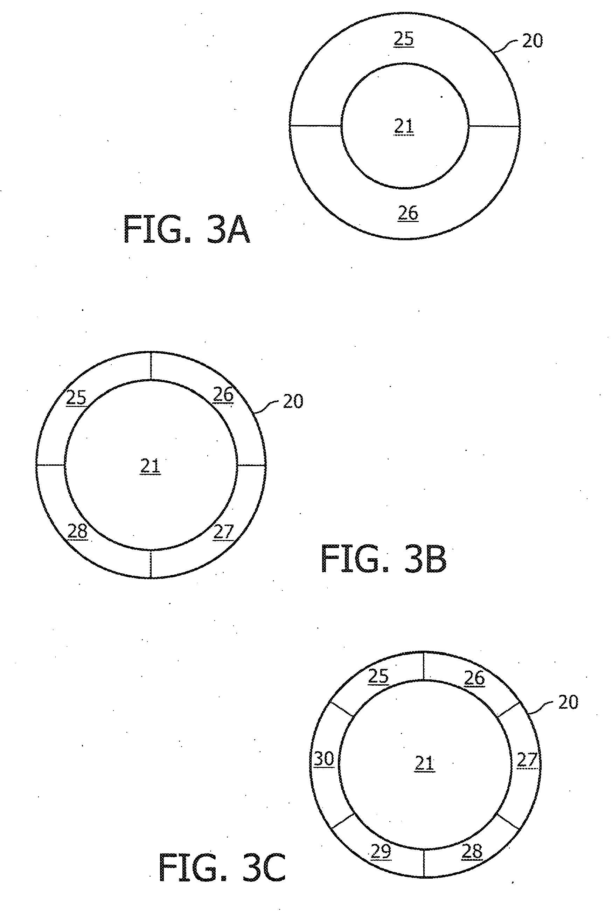

Figs. 3A-C show hotspots 25-30 arranged in different layouts inside circular regions 20 and encircling the ROI 21. Depending on the desired number of image parameters to be adjustable by hotspots, the region 20 can contain e.g. 2, 4, or 6 hotspots as shown, but may contain any number of hotspots allowed by the size-constraints discussed earlier.

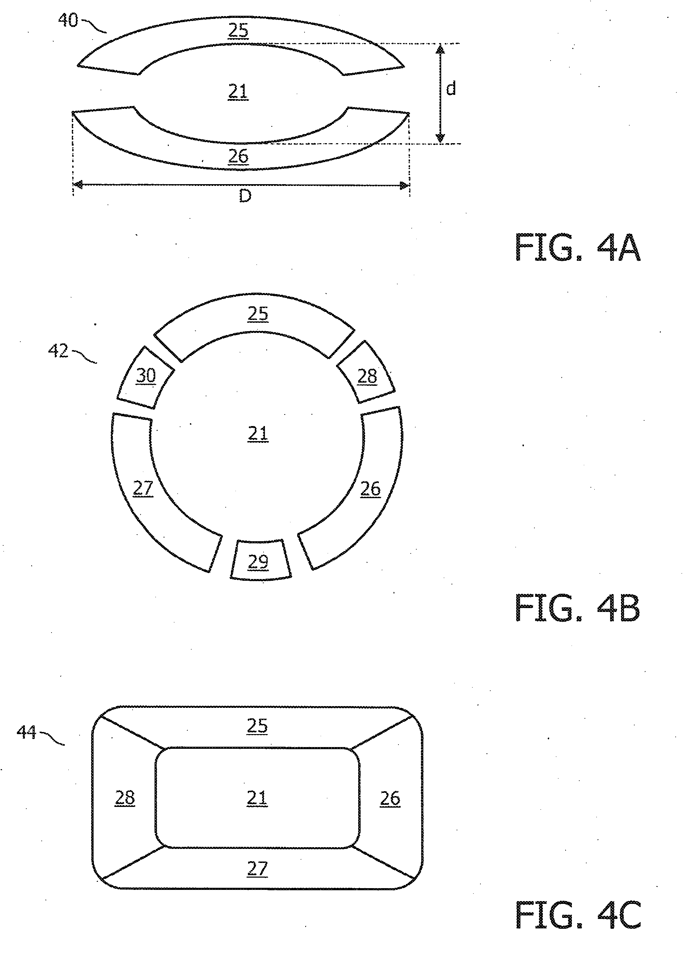

Figs. 4A-C show hotspots 25-30 arranged in different layouts inside regions 40, 42 and 44, respectively, and at least partly encircling ROI 21. Fig. 4A shows an elliptic or oval region 40 with hotspots 25 and 26 arranged therein. For non-circular regions 40 (and 44 in Fig. 4C), the inner diameter d is the smallest diameter of the inner outline, and the outer diameter D is the largest diameter of the outer outline as indicated. As shown, there can be gaps or interstices between the hotspots, which helps the user, distinguish between them and reduces the chance of unintentional fixating inside a hotspot. As illustrated in Fig. 4B, hotspots may have different angular widths, and as illustrated in Fig. 4C hotspots may have different radial widths.

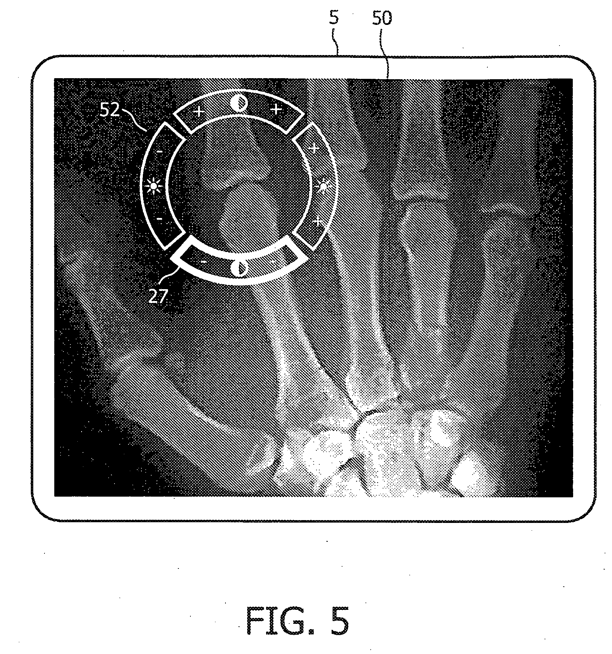

Fig. 5 shows a display 5 presenting a digital image 50. On the display 5, a number of hotspots are outlined and arranged within a region 52. In the shown example, the upper and lower hotspots are associated with increasing and decreasing a contrast of the image, respectively. Similarly, the right and left hotspots are associated with increasing and decreasing a brightness of the image, respectively. In Fig. 5, a fixation point of a user's eyes falls within the lower hotspot 27. In accordance with the invention, the hotspot is highlighted to provide user feedback while a decrease in the image contrast is performed. In this example, emphasizing the hotspot outline provides the highlighting.

To adjust different image parameters the user may need different hotspot modes, e.g. one mode corresponding to region 52 where hotspots are associated with adjusting contrast and brightness, and another, similar menu where the same hotspots are associated with adjusting zoom and rotation. Preferably, a GUI of the interaction system comprises input means allowing the user to select the image parameter adjustments associated with hotspots. The input means may be a toolbar with the different hotspot modes selectable by eye tracking. When selecting between possible image parameter adjustments, it is not important to have the ROI in focus, hence such a toolbar may be positioned away from the ROI. In another embodiment, the user can toggle between two or more different hotspot modes e.g. by eye tracking, voice or a pointing device such as a mouse. In one example, one dedicated hotspot can be associated with the toggling between hotspot modes.

Before adjusting image parameters of the ROI with the hotspots, the region 20, 40, 42 or 44, the ROI can be selected by the user. This may correspond to positioning the region in relation to the desired ROI, so that the inner outline of the region encircles the ROI. Preferably, a GUI of the interaction system comprises input means allowing the user to position the region/hotspots in relation to the digital image to encircle and border a desired ROI. In one embodiment, the user can move the region/hotspots e.g. using eye tracking, voice or a pointing device such as a mouse. In one example, one dedicated hotspot can be associated with moving the region/hotspots.

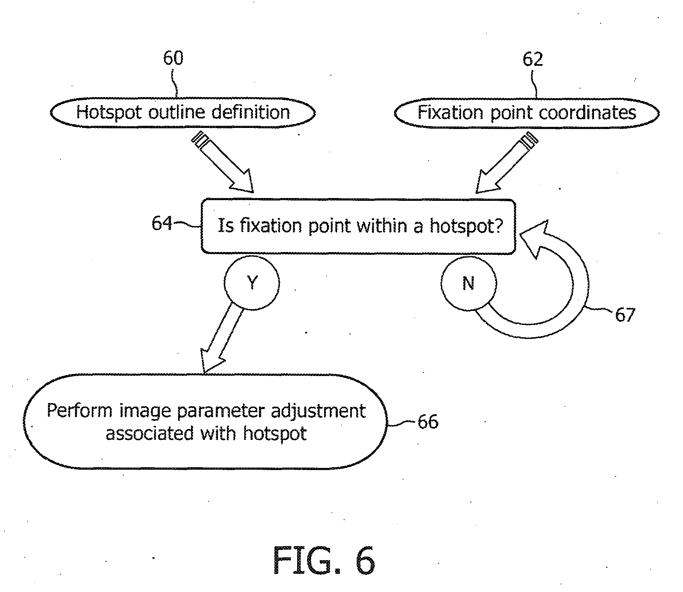

Fig. 6 is a conceptual illustration of a preferred embodiment of the method according to the invention. Based on input relating to the coordinates of the fixation point (box 62) provided by the eye-tracking system and the hotspot outlines (box 60), it is ·determined whether the user gazes at a hotspot or not (box 64). If the user gazes at a hotspot, the image parameter adjustment is performed (box 66); if not, the method is started over again (arrow 67). The method may be initiated continuously (such as at very short intervals), at a predetermined rate, or triggered by occurrences such as a change in fixation point determined by the eye tracking system.

The above-described method according to the invention can be implemented in any suitable form including hardware, software, firmware or any combination of these. The invention or some features of the invention can be implemented as software applications running on one or more data processors and/or digital signal processors. In Fig. 1, the electronic processor 6 and available software 7 embodies means for performing the various method steps. The elements and components of an embodiment of the invention may be physically, functionally and logically implemented in any suitable way. Indeed, the functionality may be implemented in a single unit, in a plurality of units or as part of other functional units. As such, the invention may be implemented in a single unit, or may be physically and functionally distributed between different units and processors.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. An eye-tracking interaction system (2) for controlling adjustment of digital image parameters, the eye-tracking interaction system comprising:
- a display (5) for presenting a digital image (50) to a user (1), the image having a region of interest (ROI) (21) in which image parameters are to be adjusted;
- an eye-tracking system (3, 4) for determining a fixation point (8) of a user's eyes on the display;
- means (6, 7) for visually outlining areas (24) defining two or more hotspots (25, 26, 27, 28, 29, 30) on the display in relation to the ROI, wherein:
- the hotspots are arranged within a region (20, 40, 42, 44, 52) bordering and at least partly encircling the ROI and allowing a user to have at least part of the ROI in focus when the fixation point of the user's eyes is within a hotspot, the region being defined by inner diameter d and outer diameter D and D is larger than d (D>d);
- the hotspots occupy different angular sections of the region;
- each hotspot is associated with a given adjustment of a given image parameter;
- means (6, 7) for performing adjustment of an image parameter associated with a hotspot when the fixation point of a user's eyes falls within the hotspot, the associated image parameter adjustment being performed at least in the ROI;
- means (6, 7) for providing feedback to the user by highlighting a hotspot when its associated image parameter adjustment is performed.

2. The eye-tracking interaction system according to claim 1, wherein the eye-tracking system can determine the fixation point on the display with a precision δ (19); and wherein the radial and angular width of any hotspot is larger than δ.

3. The eye-tracking interaction system according to any of the preceding claims, wherein D minus d is smaller than or equal to the tangent of 1 degrees times the distance between the user's eyes and the display (D-d ≤ tan(1°) (distance between the user's eyes and the display)).

4. The eye-tracking interaction system according to any of the preceding claims, wherein D minus d is smaller than or equal to d (D-d ≤ d).

5. The eye-tracking interaction system according to any of the preceding claims, wherein d is smaller than or equal to the tangent of 2 degrees times the distance between the user's eyes and the display (d ≤ tan(2°) (distance between the user's eyes and the display)) to ensure that part of the ROI is in focus when the fixation point of the user's eyes is within a hotspot.

6. The eye-tracking interaction system according to any of the preceding claims, wherein D is smaller than or equal to the tangent of 4 degrees times the distance between the user's eyes and the display (D ≤ tan(4°) (distance between the user's eyes and the display)).

7. The eye-tracking interaction system according to any of the preceding claims, wherein the eye-tracking system is configured to determine and provide a distance between the user's eyes and the display.

8. The eye-tracking interaction system according to any of the preceding claims, wherein the means for outlining the areas defming the hotspots comprises means for adjusting the generalized diameters of the region according to a provided distance between the user's eyes and the display.

9. The eye-tracking interaction system according to any of the preceding claims, wherein the two or more hotspots comprises hotspots for adjusting one or more image parameters of the ROI selected from the group consisting of contrast, brightness, color, zoom, rotation and panning.

10. The eye-tracking interaction system according to any of the preceding claims, wherein the means for performing adjustment are configured to perform image parameter adjustments when the fixation point of a user's eyes falls within the hotspot only when a previous fixation point of a user's eyes fall within the ROI or another hotspot.

11. The eye-tracking interaction system according to any of the preceding claims, wherein the means for performing adjustments are configured to perform repeated steps of parameter value adjustments as long as the fixation point of a user's eyes fall within the associated hotspot.

12. The eye-tracking interaction system according to any of the preceding claims, further comprising input means allowing the user to select the image parameter adjustment associated with hotspots.

13. The eye-tracking interaction system according to any of the preceding claims, further comprising input means allowing the user to position the region in relation to the digital image to encircle and border a desired ROI.

14. A method for eye-track controlled adjustment of image parameters in digital images, the method comprising the steps of:
- providing a display (5) for presenting a digital image (50), the image having a region of interest (ROI) (21) in which image parameters are to be adjusted;
- providing an eye-tracking system (3, 4) for determining a fixation point (8) of a user's eyes on the display;
- visually outlining areas (24) defining two or more hotspots (25, 26, 27, 28, 29, 30) on the display in relation to the ROI so that:
- the hotspots are arranged within a region (20, 40, 42, 44, 52) bordering and at least partly encircling the ROI and allowing a user (1) to have at least part of the ROI in focus when the fixation point of the user's eyes is within a hotspot, the region being defined by inner diameter d and outer diameter D larger than d (D>d);
- the hotspots occupy different angular sections of the region;
- associating each hotspot with a given adjustment of a given image parameter;
- performing adjustment of an image parameter associated with a hotspot when the fixation point of a user's eyes falls within the hotspot, the associated image parameter adjustment being performed at least in the ROI;
- providing feedback to the user by highlighting a hotspot when its associated image parameter adjustment is performed.

15. A software application configured to adapt a processing hardware in a system comprising:
- an electronic processor (6) capable of digital image processing;
- a display (5) for presenting a digital image (50), the image having a region of interest (ROI) (21) in which image parameters are to be adjusted;
- an eye-tracking system (3, 4) for determining a fixation point (8) of a user's eyes on the display;
- to perform eye-track controlled adjustment of digital image parameters, the software application comprising:
- means (7) for visually outlining areas (24) defining two or more hotspots (25, 26, 27, 28, 29, 30) on the display in relation to the ROI, wherein:
- the hotspots are arranged within a region (20, 40, 42, 44, 52) bordering and at least partly encircling the ROI and allowing a user (1) to have at least part of the ROI in focus when the fixation point of the user's eyes is within a hotspot, the region being defined by inner diameter d and outer diameter D larger than d (D>d);
- the hotspots occupy different angular sections of the region;
- each hotspot is associated with a given adjustment of a given image parameter;
- means (7) for performing adjustment of an image parameter associated with a hotspot when the fixation point of a user's eyes falls within the hotspot, the associated image parameter adjustment being performed at least in the ROI;
- means (7) for providing feedback to the user by highlighting a hotspot when its associated image parameter adjustment is performed.

## Patentansprüche

1. Blickverlauf-Interaktionssystem (2) (engl. eye-tracking) zur Steuerung der Einstellung von Digitalbildparametern, wobei das Blickverlauf-Interaktionssystem Folgendes umfasst:
- eine Anzeige (5) zur Darstellung eines Digitalbildes (50) für einen Benutzer (1), wobei das Bild eine interessierende Region (engl. region of interest, ROI) (21) hat, deren Bildparameter eingestellt werden sollen;
- ein Blickverlauf-System (3, 4) zum Bestimmen eines Fixationspunktes (8) des Blicks eines Benutzers auf der Anzeige;
- Mittel (6, 7) zum visuellen Abgrenzen von Bereichen (24), die zwei oder mehr Hotspots (25, 26, 27, 28, 29, 30) auf der Anzeige in Bezug auf die interessierende Region definieren, wobei:
- die Hotspots innerhalb einer Region (20, 40, 42, 44, 52) angeordnet sind, die an die interessierende Region angrenzt und sie mindestens teilweise umgibt und es dem Benutzer ermöglicht, mindestens einen Teil der interessierenden Region im Fokus zu behalten, wenn der Fixationspunkt des Benutzerblicks innerhalb eines Hotspots liegt, wobei die Region durch den Innendurchmesser d und den Außendurchmesser D definiert ist und D größer ist als d (D>d);
- die Hotspots verschiedene Winkelabschnitte der Region einnehmen;
- jeder Hotspot einer bestimmten Einstellung eines bestimmten Bildparameters zugeordnet ist;
- Mittel (6, 7) zum Durchführen einer Einstellung eines zu einem Hotspot gehörenden Bildparameters, wenn der Fixationspunkt eines Benutzerblicks innerhalb des Hotspots liegt, wobei die zugehörige Bildparametereinstellung mindestens in der interessierenden Region durchgeführt wird;
- Mittel (6, 7) zum Liefern einer Rückmeldung an den Benutzer, indem ein Hotspot aufgehellt wird, wenn seine zugehörige Bildparametereinstellung durchgeführt wird.

2. Blickverlauf-Interaktionssystem nach Anspruch 1, wobei das Blickverlauf-System den Fixationspunkt auf der Anzeige mit einer Genauigkeit δ (19) bestimmen kann; und wobei die radiale und winkelmäßige Breite jedes Hotspots größer als δ ist.

3. Blickverlauf-Interaktionssystem nach einem der vorhergehenden Ansprüche, wobei D minus d kleiner oder gleich dem Tangens von 1 Grad mal dem Abstand zwischen den Augen des Benutzers und der Anzeige ist (D-d ≤ tan (1°) (Abstand zwischen den Augen des Benutzers und der Anzeige)).

4. Blickverlauf-Interaktionssystem nach einem der vorhergehenden Ansprüche, wobei D minus d kleiner oder gleich d ist (D-d ≤ d).

5. Blickverlauf-Interaktionssystem nach einem der vorhergehenden Ansprüche, wobei d kleiner oder gleich dem Tangens von 2 Grad mal dem Abstand zwischen den Augen des Benutzers und der Anzeige ist (d ≤ tan (2°) (Abstand zwischen den Augen des Benutzers und der Anzeige)), um sicherzustellen, dass ein Teil der interessierenden Region im Fokus ist, wenn der Fixationspunkt des Benutzerblicks innerhalb eines Hotspots liegt.

6. Blickverlauf-Interaktionssystem nach einem der vorhergehenden Ansprüche, wobei D kleiner oder gleich dem Tangens von 4 Grad mal dem Abstand zwischen den Augen des Benutzers und der Anzeige ist (D ≤ tan (4°) (Abstand zwischen den Augen des Benutzers und der Anzeige)).

7. Blickverlauf-Interaktionssystem nach einem der vorhergehenden Ansprüche, wobei das Blickverlauf-System konfiguriert ist, um einen Abstand zwischen den Augen des Benutzers und der Anzeige zu ermitteln und zu liefern.

8. Blickverlauf-Interaktionssystem nach einem der vorhergehenden Ansprüche, wobei das Mittel zum Abgrenzen der die Hotspots definierenden Bereiche Mittel zum Einstellen der generalisierten Durchmesser der Region entsprechend einem gelieferten Abstand zwischen den Augen des Benutzers und der Anzeige umfassen.

9. Blickverlauf-Interaktionssystem nach einem der vorhergehenden Ansprüche, wobei die zwei oder mehr Hotspots Hotspots zum Einstellen von einem oder mehreren Bildparametern der interessierenden Region umfassten, die aus der Gruppe bestehend aus Kontrast, Helligkeit, Farbe, Zoom, Rotation und Schwenken ausgewählt wurden.

10. Bildverlauf-Interaktionssystem nach einem der vorhergehenden Ansprüche, wobei die Mittel zum Durchführen der Einstellung konfiguriert sind, um Bildparametereinstellungen durchzuführen, wenn der Fixationspunkt eines Benutzerblicks innerhalb des Hotspots liegt, und zwar nur dann, wenn ein vorhergehender Fixationspunkt eines Benutzerblicks innerhalb der interessierenden Region oder eines anderen Hotspots liegt.

11. Blickverlauf-Interaktionssystem nach einem der vorhergehenden Ansprüche, wobei die Mittel zum Durchführen von Einstellungen konfiguriert sind, um wiederholte Schritte von Parameterwerteinstellungen durchzuführen, solange der Fixationspunkt eines Benutzerblicks innerhalb des zugehörigen Hotspots liegt.

12. Blickverlauf-Interaktionssystem nach einem der vorhergehenden Ansprüche, weiterhin mit Eingabemitteln, die es dem Benutzer erlauben, die zu den Hotspots gehörenden Bildparametereinstellungen auszuwählen.

13. Blickverlauf-Interaktionssystem nach einem der vorhergehenden Ansprüche, weiterhin mit Eingabemitteln, die es dem Benutzer erlauben, die Region in Bezug auf das Digitalbild zu positionieren, um eine gewünschte interessierende Region einzukreisen und zu begrenzen.

14. Verfahren zur blickverlauf-gesteuerten Einstellung von Bildparametern in Digitalbildern, wobei das Verfahren die folgenden Schritte umfasst:
- Schaffen einer Anzeige (5) zur Darstellung eines Digitalbildes (50), wobei das Bild eine interessierende Region (engl. region of interest, ROI) (21) hat, deren Bildparameter eingestellt werden sollen;
- Schaffen eines Blickverlauf-Systems (3, 4) zum Bestimmen eines Fixationspunktes (8) des Blicks eines Benutzers auf der Anzeige;
- visuelles Abgrenzen von Bereichen (24), die zwei oder mehr Hotspots (25, 26, 27, 28, 29, 30) auf der Anzeige in Bezug auf die interessierende Region definieren, so dass:
- die Hotspots innerhalb einer Region (20, 40, 42, 44, 52) angeordnet sind, die an die interessierende Region angrenzt und sie mindestens teilweise umgibt und es dem Benutzer (1) ermöglicht, mindestens einen Teil der interessierenden Region im Fokus zu behalten, wenn der Fixationspunkt des Benutzerblicks innerhalb eines Hotspots liegt, wobei die Region durch den Innendurchmesser d und den Außendurchmesser D definiert ist und D größer ist als d (D>d);
- die Hotspots verschiedene Winkelabschnitte der Region einnehmen;
- Zuordnen jedes Hotspots zu einer bestimmten Einstellung eines bestimmten Bildparameters;
- Durchführen einer Einstellung eines zu einem Hotspot gehörenden Bildparameters, wenn der Fixationspunkt eines Benutzerblicks innerhalb des Hotspots liegt, wobei die zugehörige Bildparametereinstellung mindestens in der interessierenden Region durchgeführt wird;
- Liefern einer Rückmeldung an den Benutzer, indem ein Hotspot aufgehellt wird, wenn seine zugehörige Bildparametereinstellung durchgeführt wird.

15. Software-Anwendung, die konfiguriert ist, um eine Verarbeitungs-Hardware in einem System anzupassen, die Folgendes umfasst:
- einen elektronischen Prozessor (6), der in der Lage ist, Digitalbilder zu verarbeiten;
- eine Anzeige (5) zur Darstellung eines Digitalbildes (50), wobei das Bild eine interessierende Region (engl. region of interest, ROI) (21) hat, deren Bildparameter eingestellt werden sollen;
- ein Blickverlauf-System (3, 4) zum Bestimmen eines Fixationspunktes (8) des Blicks eines Benutzers auf der Anzeige;
- wobei die Software-Anwendung zum Durchführen der blickverlauf-gesteuerten Einstellung der Digitalbildparameter Folgendes umfasst:
- Mittel (7) zum visuellen Abgrenzen von Bereichen (24), die zwei oder mehr Hotspots (25, 26, 27, 28, 29, 30) auf der Anzeige in Bezug auf die interessierende Region definieren, wobei:
- die Hotspots innerhalb einer Region (20, 40, 42, 44, 52) angeordnet sind, die an die interessierende Region angrenzt und sie mindestens teilweise umgibt und es dem Benutzer (1) ermöglicht, mindestens einen Teil der interessierenden Region im Fokus zu behalten, wenn der Fixationspunkt des Benutzerblicks innerhalb eines Hotspots liegt, wobei die Region durch den Innendurchmesser d und den Außendurchmesser D definiert ist und D größer ist als d (D>d);
- die Hotspots verschiedene Winkelabschnitte der Region einnehmen;
- jeder Hotspot einer bestimmten Einstellung eines bestimmten Bildparameters zugeordnet ist;
- Mittel (7) zum Durchführen einer Einstellung eines zu einem Hotspot gehörenden Bildparameters, wenn der Fixationspunkt eines Benutzerblicks innerhalb des Hotspots liegt, wobei die zugehörige Bildparametereinstellung mindestens in der interessierenden Region durchgeführt wird;
- Mittel (7) zum Liefern einer Rückmeldung an den Benutzer, indem ein Hotspot aufgehellt wird, wenn seine zugehörige Bildparametereinstellung durchgeführt wird.

## Revendications

1. Système d'interaction de suivi oculaire (2) pour contrôler l'ajustement des paramètres d'image numérique, le système d'interaction de suivi oculaire comprenant :
- un écran d'affichage (5) pour présenter une image numérique (50) à un utilisateur (1), l'image comportant une région d'intérêt (ROI) (21) dans laquelle les paramètres d'image doivent être ajustés;
- n système de suivi oculaire (3, 4) pour déterminer un point de fixation (8) des yeux d'un utilisateur sur l'écran d'affichage ;
- un moyen (6, 7) pour souligner visuellement les zones (24) définissant deux ou plusieurs tâches de lumière (25, 26, 27, 28, 29, 30) sur l'écran d'affichage par rapport aux ROI, dans lequel :
- les tâches de lumière sont disposées à l'intérieur d'une région (20, 40, 42, 44, 52) limitant et encerclant au moins en partie les ROI et permettant à un utilisateur d'avoir au moins une partie des ROI focalisés quand le point de fixation des yeux de l'utilisateur est à l'intérieur d'une tâche de lumière, la région étant définie par le diamètre intérieur d et le diamètre extérieur D et D étant supérieur à d (D > d) ;
- les tâches de lumière occupent différentes sections angulaires de la région ;
- chaque tâche de lumière est associée à un ajustement donné d'un paramètre d'image donné;
- un moyen (6, 7) pour réaliser l'ajustement d'un paramètre d'image associé à une tâche de lumière quand le point de fixation des yeux d'un utilisateur tombe à l'intérieur de la tâche de lumière, l'ajustement du paramètre d'image associé étant réalisé au moins dans le ROI ;
- un moyen (6, 7) pour fournir un retour d'information à l'utilisateur en soulignant une tâche de lumière quand son ajustement de paramètre d'image associé est réalisé.

2. Système d'interaction de suivi oculaire selon la revendication 1, dans lequel le système de suivi oculaire peut déterminer le point de fixation sur l'écran d'affichage avec une précision δ (19) ; et dans lequel la largeur radiale et angulaire d'une tâche de lumière quelconque est supérieure à δ.

3. Système d'interaction de suivi oculaire selon l'une quelconque des revendications précédentes, dans lequel D moins d est inférieur ou égal à la tangente de 1 degré par la distance entre les yeux de l'utilisateur et l'écran d'affichage (D - d ≤ tan(1°) (distance entre les yeux de l'utilisateur et l'écran d'affichage)).

4. Système d'interaction de suivi oculaire selon l'une quelconque des revendications précédentes, dans lequel D moins d est inférieur ou égal à d (D - d ≤ d).

5. Système d'interaction de suivi oculaire selon l'une quelconque des revendications précédentes, dans lequel d est inférieur ou égal à la tangente de 2 degrés par la distance entre les yeux de l'utilisateur et l'écran d'affichage (d ≤ tan(2°) (distance entre les yeux de l'utilisateur et l'écran d'affichage)) pour garantir qu'une partie du ROI est focalisée quand le point de fixation des yeux de l'utilisateur est à l'intérieur d'une tâche de lumière.

6. Système d'interaction de suivi oculaire selon l'une quelconque des revendications précédentes, dans lequel D est inférieur ou égal à la tangente de 4 degrés par la distance entre les yeux de l'utilisateur et l'écran d'affichage (D ≤ tan(4°) (distance entre les yeux de l'utilisateur et l'écran d'affichage)).

7. Système d'interaction de suivi oculaire selon l'une quelconque des revendications précédentes, dans lequel le système de suivi oculaire est configuré pour déterminer et fournir une distance entre les yeux de l'utilisateur et l'écran d'affichage.

8. Système d'interaction de suivi oculaire selon l'une quelconque des revendications précédentes, dans lequel le moyen pour souligner les zones définissant les tâches de lumière comprend un moyen pour ajuster les diamètres généralisés de la région selon une distance donnée entre les yeux de l'utilisateur et l'écran d'affichage.

9. Système d'interaction de suivi oculaire selon l'une quelconque des revendications précédentes, dans lequel les deux ou plusieurs tâches de lumière comprennent les tâches de lumière pour ajuster un ou plusieurs paramètres d'image du ROI sélectionné parmi le groupe composé du contraste, de la brillance, de la couleur, du zoom, de la rotation et du panoramique.

10. Système d'interaction de suivi oculaire selon l'une quelconque des revendications précédentes, dans lequel les moyens pour réaliser l'ajustement sont configurés pour réaliser les ajustements des paramètres d'image quand le point de fixation des yeux d'un utilisateur tombe à l'intérieur de la tâche de lumière seulement quand un point de fixation précédent des yeux d'un utilisateur tombe à l'intérieur du ROI ou d'une autre tâche de lumière.

11. Système d'interaction de suivi oculaire selon l'une quelconque des revendications précédentes, dans lequel les moyens pour réaliser les ajustements sont configurés pour réaliser des étapes répétées d'ajustements des valeurs des paramètres tant que le point de fixation des yeux d'un utilisateur tombe à l'intérieur de la tâche de lumière associée.

12. Système d'interaction de suivi oculaire selon l'une quelconque des revendications précédentes, comprenant également un moyen d'entrée permettant à l'utilisateur de sélectionner l'ajustement du paramètre d'image associé aux tâches de lumière.

13. Système d'interaction de suivi oculaire selon l'une quelconque des revendications précédentes, comprenant également un moyen d'entrée permettant à l'utilisateur de positionner la région par rapport à l'image numérique pour encercler et délimiter un ROI désiré.

14. Procédé pour l'ajustement contrôlé par suivi oculaire des paramètres d'image en images numériques, le procédé comprenant les étapes consistant à :
- fournir un écran d'affichage (5) pour présenter une image numérique (50), l'image comportant une région d'intérêt (ROI) (21) dans laquelle les paramètres d'image doivent être ajustés ;
- fournir un système de suivi oculaire (3, 4) pour déterminer un point de fixation (8) des yeux d'un utilisateur sur l'écran d'affichage ;
- souligner visuellement les zones (24) définissant deux ou plusieurs tâches de lumière (25, 26, 27, 28, 29, 30) sur l'écran d'affichage par rapport au ROI, de telle sorte que :
- les tâches de lumière soient disposées à l'intérieur d'une région (20, 40, 42, 44, 52) limitant et au encerclant moins partiellement le ROI et permettant à un utilisateur (1) d'avoir au moins une partie du ROI focalisée quand le point de fixation de yeux de l'utilisateur est à l'intérieur d'une tâche de lumière, la région étant définie par le diamètre intérieur d et le diamètre extérieur D supérieur à d (D > d) ;
- les tâches de lumière occupent différentes sections angulaires de la région ;
- associer chaque tâche de lumière avec un ajustement donné d'un paramètre d'image donné ;
- réaliser l'ajustement d'un paramètre d'image associé à une tâche de lumière quand le point de fixation des yeux d'un utilisateur tombe à l'intérieur de la tâche de lumière, l'ajustement du paramètre d'image associé étant réalisé au moins dans le ROI ;
- fournir un retour d'information à l'utilisateur en soulignant une tâche de lumière quand son ajustement de paramètre d'image associé est réalisé.

15. Application logicielle configurée pour adapter un matériel de traitement dans un système, comprenant :
- un processeur électronique (6) capable de traiter les images numériques ;
- un écran d'affichage (5) pour présenter une image numérique (50), l'image comportant une région d'intérêt (ROI) (21) dans laquelle les paramètres d'image doivent être ajustés ;
- un système de suivi oculaire (3, 4) pour déterminer un point de fixation (8) des yeux d'un utilisateur sur l'écran d'affichage ;
- la réalisation de l'ajustement contrôlé par suivi oculaire des paramètres d'image numérique, l'application logicielle comprenant :
- un moyen (7) pour souligner visuellement les zones (24) définissant deux ou plusieurs tâches de lumière (25, 26, 27, 28, 29, 30) sur l'écran d'affichage par rapport au ROI, dans lequel :
- les tâches de lumière sont disposées à l'intérieur d'une région (20, 40, 42, 44, 52) limitant et encerclant au moins partiellement le ROI et permettant à un utilisateur (1) d'avoir au moins une partie des ROI focalisée quand le point de fixation de yeux de l'utilisateur est à l'intérieur d'une tâche de lumière, la région étant définie par le diamètre intérieur d et le diamètre extérieur D supérieur à d (D > d) ;
- les tâches de lumière occupent différentes sections angulaires de la région ;
- chaque tâche de lumière est associée à un ajustement donné d'un paramètre d'image donné ;
- un moyen (7) pour réaliser l'ajustement d'un paramètre d'image associé à une tâche de lumière quand le point de fixation des yeux d'un utilisateur tombe à l'intérieur de la tâche de lumière, l'ajustement du paramètre d'image associé étant réalisé au moins dans le ROI ;
- un moyen (7) pour fournir un retour d'information à l'utilisateur en soulignant une tâche de lumière quand son ajustement de paramètre d'image associé est réalisé.
